# EUROPÄISCHE PATENTSCHRIFT

(11) **EP 0 547 304 B1**
(45) Veröffentlichungstag und Bekanntmachung des Hinweises auf die Patenterteilung: **10.05.1995**
(21) Anmeldenummer: 92116330.9
(22) Anmeldetag: 24.09.1992
(51) Int. Cl.: A01K 5/02, A01K 11/00

(54) **Vorrichtung und Verfahren zur Einbringung von Viehfutter in einen Futtertrog**
Method and means for delivering animal feed in a feeding trough
Procédé et dispositif pour distibuer de l'alimentation animale dans une mangeoire

(30) Priorität: 15.12.1991 DE 4141347
(43) Veröffentlichungstag der Anmeldung: 23.06.1993
(73) Patentinhaber: Förster, Martin, Dipl.-Ing., D-78234 Engen (DE)
(72) Erfinder: Förster, Martin, Dipl.-Ing., D-78234 Engen (DE)
(74) Vertreter: Engelhardt, Guido, Dipl.-Ing.

(56) Entgegenhaltungen:
- DE-A- 1 802 194
- DE-A- 2 018 987
- GB-A- 802 422
- US-A- 4 361 117
- US-A- 4 508 061
- LANDTECHNIK Bd. 43, Nr. 5, 1. Mai 1988, LEHRTE (DE) Seite 230 NN 'IDENTIFIKATIONSSYSTEME'

## Beschreibung

Die Erfindung bezieht sich auf eine Vorrichtung sowie auf ein Verfahren zur gesteuerten Einbringung von Viehfutter aus einem Vorratsbehälter in einen Futtertrog mit Hilfe einer antreibbaren Förderschnecke oder einem ähnlichen Fördermittel, deren Antriebsmotor durch eine Steuereinheit schaltbar ist.

Durch die EP-B1-00 29 278 ist eine Viehfütterungsvorrichtung dieser Art bekannt. An der Förderschnecke, die hierbei als Dosiereinrichtung dient, ist in Förderrichtung an diese ein Behälter angebracht, in den mittels der Förderschnecke das Viehfutter aus einem Vorratsbehälter eingefüllt wird. Da der Behälter fest mit der Förderschnecke verbunden ist, wird dieser zusammen mit der Förderschnecke gedreht, so daß das in diesem angesammelte Viehfutter in ein als Fördertrog vorgesehenes Gehäuse entleert wird, in das ein Tier zur Aufnahme des Futters seinen Kopf hineinstrecken kann. Die Dosiereinrichtung, d. h. die Förderschnecke ist durch Signale steuerbar, die in Abhängigkeit von der Anwesenheit des Tierkopfes in der Öffnung des Gehäuses erzeugbar sind.

Sobald ein Tier seinen Kopf in das Gehäuse hineinstreckt, wird somit mittels der Förderschnecke eine vorbestimmte der Kennung des Tieres entsprechende Menge des bevorrateten Futtermittels aus dem Vorratsbehälter abgezogen und über den sich mitdrehenden Behälter, durch den lediglich verhindert wird, daß bei stillstehender Förderschnecke Futtermittel in das Gehäuse gelangt, in dieses eingebracht. Nimmt jedoch das einen Dosiervorgang auslösende Tier die diesem zugeteilte Futtermittelmenge nicht oder nur teilweise auf, verbleibt das nicht gefressene Futter in dem Gehäuse, die nachfolgenden, zu der Futterstelle drängenden Tiere können demnach jeweils eine nicht kontrollierbare Menge an Futtermittel fressen. Mitunter sammelt sich aufgrund der nicht bestimmbaren Futter- mittelaufnahme nach kurzer Zeit in dem Gehäuse eine derart große Restmenge an, daß dieses gefüllt ist und das Futtermittel zu Boden fällt. Ein vollständiges Entleeren des Gehäuses durch Auffressen des in diesem vorhandenen aus dem Vorratsbehälter abgezogenen Futtermittels erfolgt demnach nur zufällig. Abgesehen davon, daß das in dem Gehäuse verbleibende Futtermittel oftmals verschmutzt und somit von den Tieren nicht mehr aufgenommen wird, ist mit Hilfe der bekannten Viehfütterungsvorrichtung eine exakte Zuteilung von Futtermittel an das jeweils an der Futterstelle verweilende Tier nicht zu bewerkstelligen.

Aufgabe der Erfindung ist es daher, eine Vorrichtung der vorgenannten Art zur gesteuerten Einbringung von Futtermittel aus einem Vorratsbehälter in einen Futtertrog sowie unter Anwendung dieser Vorrichtung ein Verfahren zu schaffen, mittels denen es möglich ist, einem an einer Futterstelle befindlichen Tier zwar Futtermittel zuzuteilen, jedes Tier soll aber höchstens die Futtermittelmenge zur Aufnahme erhalten, die für dieses Tier bestimmt ist. Dabei soll zuverlässig gewährleistet sein, daß der Futtertrog von einem Tier stets leergefressen wird, da erst bei einem leeren Trog eine erneute Futterzuteilung erfolgen soll, so daß jedes Tier unter den gleichen Voraussetzungen Futter aufnehmen kann und eine Futteransammlung oder ungleiche Verteilung ausgeschlossen sind. Auch sollen Tiere die Futterzuteilung selbst auslösen können. Der dazu erforderliche Bauaufwand soll gering gehalten werden, dennoch soll nur die einem Tier maximal zustehende Futtermittelmenge diesem zur Aufnahme zur Verfügung gestellt werden. Auch soll ein Verderben von Viehfutter nahezu ausgeschlossen sein und die Handhabung bei der Viehfütterung soll erleichtert werden.

Gemäß der Erfindung wird dies bei einer Vorrichtung der eingangs genannten Gattung dadurch erreicht, daß die Förderschnecke oder ein ähnliches Fördermittel über eine koaxial zu dieser angeordneten Einlaßöffnung unmittelbar an den Futtertrog angeschlossen ist, und daß vor der Einlaßöffnung eine mit einem Schaltelement zusammenwirkende Steuerklappe verschwenkbar angeordnet ist, mittels der der Antriebsmotor der Förderschnecke in Abhängigkeit von der in dem Futtertrog bzw. hinter der Steuerklappe befindlichen Futtermittelmenge abschaltbar ist. Die Steuerklappe kann durch ein Tier betätigbar sein, derart, daß dadurch der Antriebsmotor der Förderschnecke eingeschaltet wird.

Zweckmäßig ist es hierbei, die Steuerklappe mittels eines Scharniers, eines Gelenks oder dgl. über der Einlaßöffnung des Futtertroges verschwenkbar aufzuhängen und mit einer Schaltfahne zu versehen, die unmittelbar oder über Zwischenglieder mit einem mit der Steuereinheit verbundenen in Form eines Signalgebers ausgebildeten Schaltelementes zusammenwirkt.

Die Schaltfahne der Steuerklappe sollte durch eine in der Wandung des Futtertroges eingearbeitete Öffnung hindurch- oder seitlich an der Wandung vorbeigeführt und das Schaltelement sollte auf der Außenseite des Futtertroges, vorzugsweise an diesem im Schwenkbereich der Schaltfahne, angebracht sein, auch sollte das Schaltelement in Richtung der Schaltfahne verstellbar, beispielsweise mittels in dessen Gehäuse eingearbeiteter Langlöcher durchgreifender Schrauben an einem an dem Futtertrog angebrachten Halter befestigt sein.

Des weiteren ist es angebracht, die Steuerklappe mit einer in deren unteren Bereich angeordneten Beschwerung zu versehen, die an einer an der Steuerklappe angeformten, z. B. winkelförmig ausgebildeten in den Futtertrog ragenden Abkantung angebracht sein kann.

Ferner kann die Steuerklappe mit einem mit dieser vertikal verstellbaren und/oder auswechselbar verbundenen Ansatzstück versehen sein, wobei das Ansatzstück als Beschwerung ausgebildet und/oder daß die Beschwerung an dem Ansatzstück angebracht ist.

Es ist aber auch möglich, die Steuerklappe durch die Kraft einer unmittelbar auf diese und/oder die Schaltfahne einwirkenden Feder in die Ausgangsstellung zurückzustellen oder die Steuerklappe zur Betätigung des Schaltelementes entgegen der Kraft einer Feder zu verstellen.

Die auf die Steuerklappe einwirkende Feder kann an dem auf das Schaltelement einwirkenden Schenkel der Schaltfahne und der Wand des Futtertroges oder einem Zwischenstück angehängt oder abgestützt sein.

Vorteilhaft ist es des weiteren die Steuereinheit in Abhängigkeit von den von einem zu versorgenden Tier abgegebenen mittels einer Antenne aufgenommenen Signalen zu beeinflussen.

Das Verfahren zur gesteuerten Einbringung von Viehfutter aus einem Vorratsbehälter in einen Futtertrog mit Hilfe einer antreibbaren Förderschnecke, deren Antriebsmotor durch eine Steuereinheit schaltbar ist, ist dadurch gekennzeichnet, daß mittels einer von einer Einlaßöffnung des Futtertroges verschwenkbar angeordneten Steuerklappe ein mit der Steuereinheit verbundenes Schaltelement derart betätigbar ist, daß der Antriebsmotor der Förderschnecke in Abhängigkeit von der in dem Futtertrog befindlichen Futtermittelmenge so lange abgeschaltet bleibt, bis die jeweils zugeteilte Futtermittelmenge aufgenommen ist.

Zweckmäßig ist es hierbei, daß die Steuerklappe durch ein Tier betätigbar ist, derart, daß der Antriebsmotor der Förderschnecke durch Einwirken eines zu versorgenden Tieres auf die durch dieses betätigte Steuerklappe eingeschaltet wird und so lange eingeschaltet bleibt, bis die jeweils zugeteilte Futtermittelmenge in den Futtertrog eingebracht bzw. aufgenommen ist, und die Steuereinheit durch von dem zu versorgenden Tier abgegebener mittels einer Antenne aufgenommener Signale zu beinflussen.

Wird eine Vorrichtung zur gesteuerten Einbringung von Viehfutter aus einem Vorratsbehälter in einen Futtertrog gemäß der Erfindung ausgebildet, so ist es zuverlässig möglich, den einzelnen zu versorgenden Tieren jeweils diejenige Futtermittelmenge exakt zuzuteilen, die diesen aufgrund ihrer Kennung zusteht. Wird nämlich vor der Einlaßöffnung der Förderschnecke in den Futtertrog eine Steuerklappe verschwenkbar angeordnet, mittels der in Abhängigkeit von der in dem Futtertrog befindlichen Futtermittelmenge die Förderschnecke außer Betrieb gesetzt werden kann, wird auf einfache Weise verhindert, daß sich in dem Futtertrog das in diesen eingebrachte Futtermittel ansammelt und von anderen Tieren zusätzlich gefressen wird. Die von einem Tier aufzunehmende Futtermittelmenge wird vielmehr auf die diesem entsprechend seiner Kennung zustehende Futtermittelmenge begrenzt.

Mit Hilfe der mit einem Schaltelement zusammenwirkenden Steuerklappe kann demnach die Menge des in den Futtertrog einzubringenden Futtermittels sehr genau, aber mit äußerst einfachen Mitteln gesteuert werden. Hat sich nach Auslösen eines Futtervorganges - auch ein Tier kann selbst bei leerem Futtertrog die Steuerklappe betätigen und dadurch den Antriebsmotor der Förderschnecke einschalten - in dem Futtertrog eine gewisse einstellbare Menge an Futtermittel angesammelt, weil beispielsweise ein Tier langsam Futter aufnimmt oder überhaupt nicht frißt, so wird, da in diesem Fall die Steuerklappe ausgeschwenkt wird und die an dieser angebrachte Schaltfahne auf das Schaltelement einwirkt, der Antriebsmotor der Förderschnecke abgeschaltet. Und dieser kann erst wieder in Betrieb genommen werden, wenn die in dem Futtertrog verbliebene Restmenge aufgefressen ist, da erst dann die Steuerklappe selbsttätig oder durch die Kraft einer Feder in eine Stellung zurückschwenkbar ist, in der das Schaltelement nicht mehr betätigt wird. Eine Ansammlung von Viehfutter in dem Futtertrog, das von nicht zur Futteraufnahme berechtigten Tieren gefressen werden könnte, ist demnach nahezu ausgeschlossen. Bei Anwendung der vorschlagsgemäßen Vorrichtung bzw. des vorgesehenen Verfahrens ist somit eine exakte Zuteilung der einzelnen Futterrationen an die jeweils berechtigten Tiere ohne Schwierigkeiten zu bewerkstelligen.

In der Zeichnung ist ein Ausführungsbeispiel einer gemäß der Erfindung ausgebildeten Vorrichtung zur gesteuerten Einbringung von Viehfutter in einen Futtertrog dargestellt, das nachfolgend im einzelnen erläutert ist. Hierbei zeigt:
- Figur 1: die Fütterungsvorrichtung vor Inbetriebnahme, in einer Seitenansicht,
- Figur 2: die Vorrichtung nach Figur 1 in einer Betriebsstellung, in der durch das im Futtertrog befindliche Futtermittel die Förderschnecke außer Betrieb gesetzt ist,
- Figur 3: die Vorrichtung nach Figur 2, in Vorderansicht, und
- Figur 4: die Vorrichtung nach Figur 2 mit einer andersartigen Betätigung des Schaltelementes.

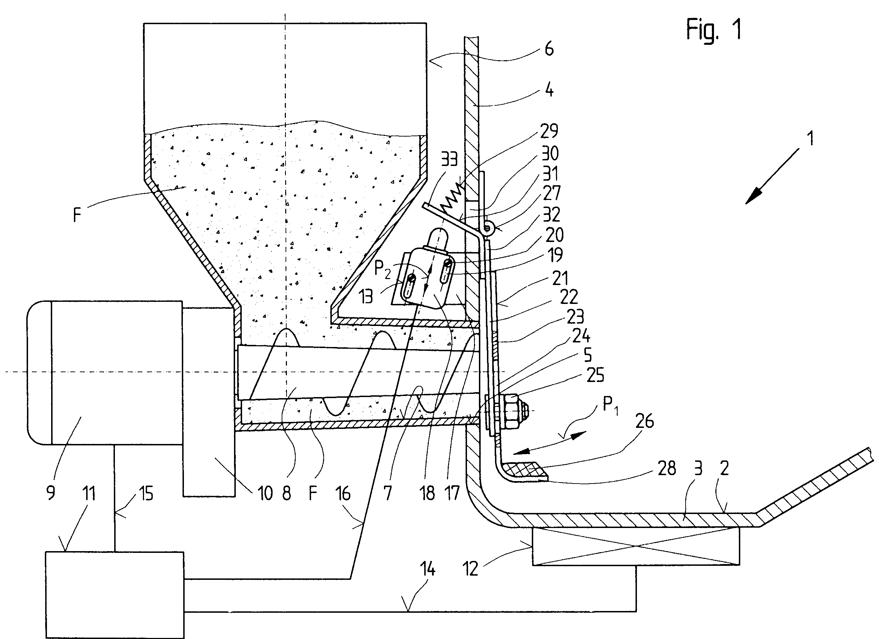

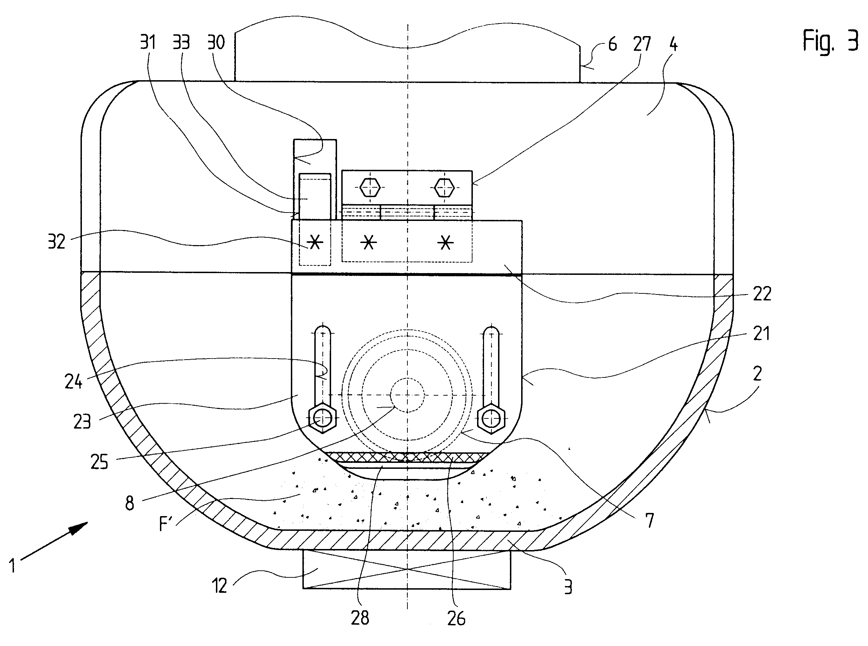

Die in den Figuren 1 bis 4 dargestellte und mit 1 bzw. 1' bezeichnete Vorrichtung dient zur Versorgung von Tieren insbesondere mit Kraftfutter und besteht im wesentlichen aus einem wannenförmig ausgbildeten Futtertrog 2 und einem Vorratsbehälter 6, aus dem das bevorratete Viehfutter F mittels einer Förderschnecke 8 in den Futtertrog 2 einbringbar ist. Zum Antrieb der Förderschnecke 8 ist ein Antriebsmotor 9 vorgesehen, der mit dieser über ein Getriebe 10 trieblich verbunden ist.

Um bei dem Ausführungsbeispiel nach den Figuren 1 bis 3 einen Futtervorgang auszulösen, ist unterhalb des Bodens 3 des Futtertroges 2 eine Antenne 12 angeordnet, die über eine Signalleitung 14 an eine Steuereinheit 11 angeschlossen ist, die wiederum über eine Signalleitung 15 mit dem Antriebsmotor 9 der Förderschnecke 8 in Verbindung steht. Nähert sich ein mit einer Kennung, die meist an einem Halsband getragen wird, versehenes Tier der Antenne 12, so werden die aufgenommenen Signale in der vorzugsweise mit einem Rechner ausgestatteten Steuereinheit 11 ausgewertet und der Antriebsmotor 9 der Förderschnecke 8 wird für eine bestimmte Zeit in Betrieb gesetzt, so daß dem Tier eine vorgegebene Menge an Futtermittel zugeteilt und in den Futtertrog 2 eingebracht wird.

Da jedoch Tiere mitunter die ihnen zugeteilte Futtermittelmenge nicht vollständig auffressen, so daß andere Tiere eine unkontrollierbare Menge an Futtermittel zu sich nehmen könnten, sind bei der Vorrichtung 1 Maßnahmen vorgesehen, um dies zu verhindert. Es soll demnach jeweils nur dann Viehfutter in den Futtertrog 2 eingebracht werden, wenn das in diesen geförderte Futter bis auf eine geringe einstellbare Restmenge auch tatsächlich von dem berechtigten Tier aufgenommen worden ist.

Um dies zu bewerkstelligen, ist vor einem unmittelbar in den Futtertrog 2 mündenden Förderkanal 7, der die Förderschnecke 8 aufnimmt und in eine in eine Seitenwandung 4 des Futtertroges 2 eingearbeitete Öffnung 5 eingesetzt ist, eine Steuerklappe 21 angebracht, die mittels eines Scharniers 27 über der Öffnung 5 verschwenkbar aufgehängt ist. Die Steuerklappe 21 ist des weiteren mit einer Schaltfahne 31 versehen, die durch eine in die Seitenwand 4 eingearbeitete Öffnung 30 hindurchgeführt ist und mit einem Schaltelement 13 zusammenwirkt. Über eine Signalleitung 16 ist das Schaltelement 13 wiederum mit der Steuereinheit 13 verbunden.

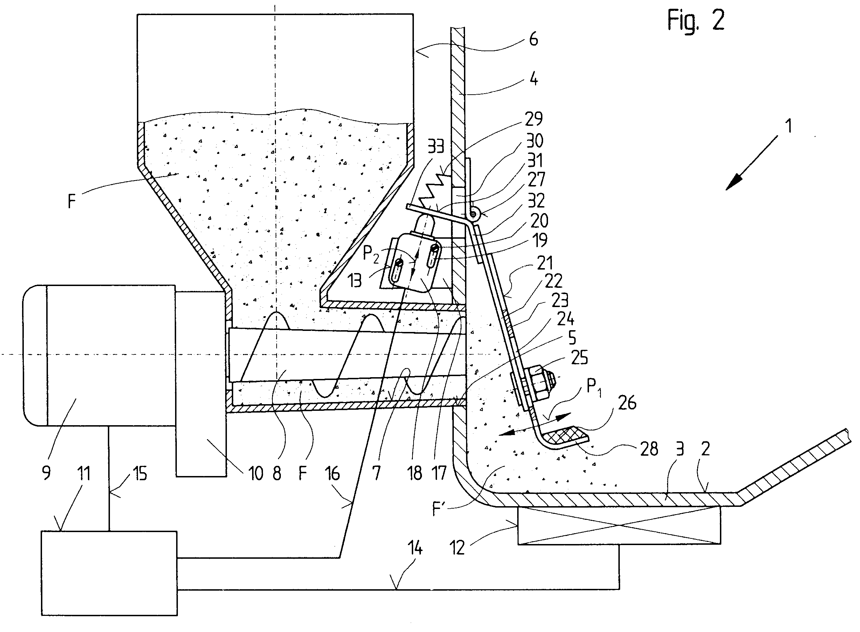

Bei betätigtem Schaltelement 13, wie dies in Figur 2 dargesellt ist, ist über die Steuereinheit 11 der Antriebsmotor 9 der Förderschnecke 8 außer Betrieb gesetzt, so daß durch diese kein weiteres Futtermittel F in den Futtertrog 2 gefördert wird. Dieser Betriebszustand kann eintreten, wenn das in den Futtertrog 2 eingebrachte Futtermittel F' nicht oder nicht vollständig von dem berechtigten Tier aufgenommen wird und sich somit dort ansammelt, so daß die Steuerklappe 21 ausgeschwenkt und durch die Schaltfahne 31 das Schaltelement 13 betätigt wird.

Mittels eines Halters 17, auf dem das Schaltelement 13 befestigt ist, ist dieser auf der Rückseite der Seitenwand 4 im Schwenkbereich der Schaltfahne 31 angebracht. Um Toleranzen leicht ausgleichen zu können, ist das Gehäuse 18 des Schaltelementes 13 mit Langlöchern 19 versehen, die von Schrauben 20 durchgriffen sind. Das Schaltelement 13 kann somit in Richtung der Schaltfahne 31, wie dies durch den Pfeil P₂ dargestellt ist, verstellt werden.

Die Steuerklappe 21 besteht aus einer an dem Scharnier 27 befestigten Platte 22 und einem Ansatzstück 23, die mittels Schrauben 25 miteinander verbunden sind. In dem Ansatzstück 25 sind Langlöcher 24 eingearbeitet, so daß das Ansatzstück 25 in Längsrichtung verstellt werden kann. Des weiteren weist das Ansatzstück 25 eine in Richtung des Futtertroges 2 abstehende Abkantung 28 auf, auf der eine Beschwerung 26 angeordnet ist. Die Rückstellung der Steuerklappe 21, die aufgrund der Schwerkraft selbsttätig erfolgt, kann somit durch die Länge der Verschlußklappe 21 und/oder die Beschwerung 26 beeinflußt werden.

Die Schaltfahne 31 ist aus zwei Schenkeln 32 und 33 zusammengesetzt. Der Schenkel 32 ist an der Platte 22 der Verschlußklappe 21 angeschweißt, der Schenkel 33 dagegen ist durch die in die Wandung 4 eingearbeitete Öffnung 30 hindurchgeführt und wirkt auf das Schaltelement 13 ein.

Die Steuerklappe 21 kann aber auch durch die Kraft einer Zugfeder 29 in die Ausgangslage zurückgeführt werden. Die Zugfeder 29 ist hierbei an dem auf das Schaltelement 13 einwirkenden Schenkel 33 der Schaltfahne 31 sowie der Wand 4 des Futtertroges 2 angehängt. Die Zugfeder 29 kann zusätzlich zu der Beschwerung 26 oder anstelle von dieser vorgesehen werden.

Bei einer bestimmten Menge an Viehfutter F' in dem Futtertrog 2 wird somit durch die durch dieses in Richtung des Pfeiles P 1 ausgeschwenkte Steuerklappe 21 das über die Signalleitung 16 an die Steuereinheit 11 angeschlossene Schaltelement 13 betätigt. Und so lange der Schenkel 32 der Schaltfahne 31 auf das Schaltelement 13 einwirkt, ist der Antriebsmotor 9 nicht einschaltbar, Viehfutter F kann demnach mittels der Förderschnecke 8 erst wieder in den Futtertrog 2 gefördert werden, wenn das in diesem befindliche Futtermittel F' nahezu vollständig von einem Tier aufgenommen ist. Auf diese Weise wird zuverlässig verhindert, daß ein Tier mehr Viehfutter fressen kann als diesem zusteht.

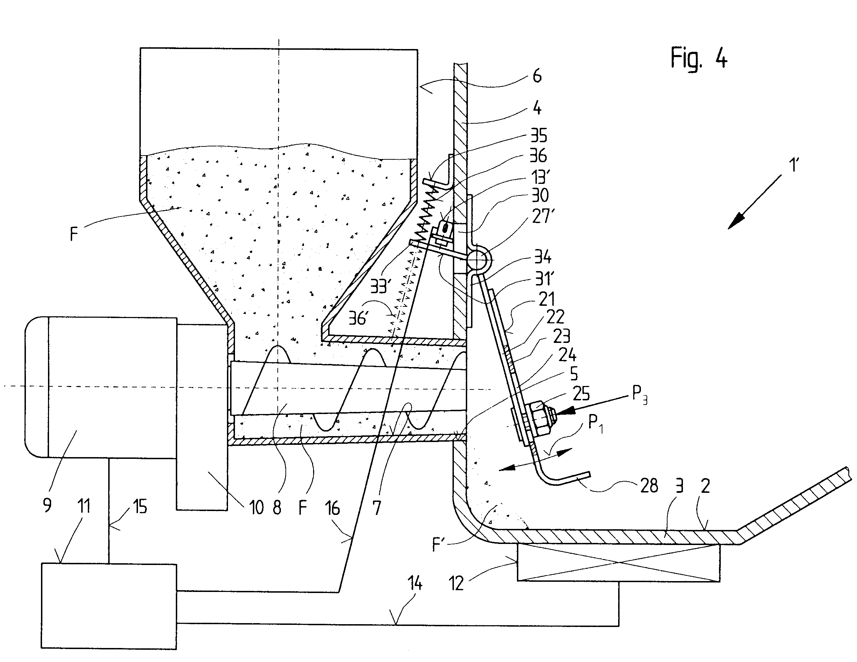

Bei der Vorrichtung 1' nach Figur 4 ist vorgesehen, daß das Futtermittel F aus dem Vorratsbehälter 6 in den Futtertrog 2 eingebracht wird, wenn das zu versorgende Tier dies wünscht. Um dies auf einfache Weise bewerkstelligen zu können, wirkt auf den Schenkel 33' der Schaltfahne 31' eine Druckfeder 36 ein, die an einer an der Wandung 4 befestigten Platte 35 abgestützt ist. Anstelle der Druckfeder 36 kann aber auch, wie dies strichpunktiert eingezeichnet ist, eine z.B. an dem Förderkanal 7 eingehängte Zugfeder 36' vorgesehen werden.

Wird die Steuerklappe 21 durch ein Tier, da dieses Futtermittel aufnehmen möchte, bei leerem oder nahezu leerem Futtertrog 2 in Richtung des Pfeiles P 3 verstellt, so wird entgegen der Kraft der Feder 36 bzw. 36' der Schenkel 33' der Schaltfahne 31' an das Schaltelement 13' angelegt und durch dieses wird über die Signalleitung 16 die Steuereinheit 11 betätigt. Da mittels der Antenne 12 festgestellt wurde, welches Tier fressen möchte, kann diesem, da in der Steuereinheit 11 die jeweiligen Daten gespeichert sind, die entsprechende Futtermittelmenge F' zugeteilt werden. Der Antriebsmotor 9 der Förderschnecke 8 ist somit durch Einwirken des jeweils zu versorgenden Tieres für eine gewisse Zeitspanne einschaltbar.

Die Steuerklappe 21 ist bei dieser Ausführungsvarianten mittels eines Gelenkes 27', das durch Schellen 34 an der Wandung 4 befestigt ist, verschwenkbar über der Einlaßöffnung 5 aufgehängt. Eine Beschwerung der Steuerklappe 21 kann hierbei entfallen, da diese, sobald das Tier nicht mehr auf die Steuerklappe 21 einwirkt, durch die Kraft der Feder 36 bzw. 36' in die gezeigte Ausgangsstellung zurückgeschwenkt und der Schenkel 33' der Schaltfahne 31' somit von dem Schaltelement 13' abgehoben wird. Befindet sich in dem Futtertrog 2 jedoch eine größere Menge Futtermittel F', kann die Steuerklappe 21 durch ein Tier nicht verschwenkt und somit das Schaltelement 13' nicht betätigt werden.

## Patentansprüche

1. Vorrichtung (1, 1') zur gesteuerten Einbringung von Viehfutter (F) aus einem Vorratsbehälter (6) in einen Futtertrog (2) mit Hilfe einer antreibbaren Förderschnecke (8) oder einem ähnlichen Fördermittel, deren Antriebsmotor (9) durch eine Steuereinheit (11) schaltbar ist,
**dadurch gekennzeichnet,**
daß die Förderschnecke (8) oder ein ähnliches Fördermittel über eine koaxial zu dieser angeordneten Einlaßöffnung (5) unmittelbar an den Futtertrog (2) angeschlossen ist, und daß vor der Einlaßöffnung (5) eine mit einem Schaltelement (13, 13') zusammenwirkende Steuerklappe (21) verschwenkbar angeordnet ist, mittels der der Antriebsmotor (9) der Förderschnecke (8) in Abhängigkeit von der in dem Futtertrog (2) bzw. hinter der Steuerklappe (21) befindlichen Futtermittelmenge (F') abschaltbar ist.

2. Vorrichtung nach Anspruch 1,
**dadurch gekennzeichnet,**
daß die Steuerklappe (21) durch ein Tier betätigbar und dadurch der Antriebsmotor (9) der Förderschnecke (8) einschaltbar ist.

3. Vorrichtung nach Anspruch 1 od. 2,
**dadurch gekennzeichnet,**
daß die Steuerklappe (21) mittels eines Scharniers (27), eines Gelenkes (27') od. dgl. über der Einlaßöffnung (5) des Futtertroges (2) verschwenkbar aufgehängt ist.

4. Vorrichtung nach einem der Ansprüche 1 bis 3,
**dadurch gekennzeichnet,**
daß die Steuerklappe (21) mit einer Schaltfahne (31, 31') versehen ist, die unmittelbar oder über Zwischenglieder mit dem mit der Steuereinheit (11) verbundenen in Form eines Signalgebers ausgebildeten Schaltelement (13, 13') zusammenwirkt.

5. Vorrichtung nach Anspruch 4,
**dadurch gekennzeichnet,**
daß die Schaltfahne (31, 31') der Steuerklappe (21) durch eine in die Wandung (4) des Futtertroges (2) eingearbeitete Öffnung (30) hindurch- oder seitlich an der Wandung (4) vorbeigeführt und das Schaltelemtent (13, 13') auf der Außenseite des Futtertroges (2), vorzugsweise an diesem im Schwenkbereich der Schaltfahne (31, 31'), angebracht ist.

6. Vorrichtung nach Anspruch 4 oder 5,
**dadurch gekennzeichnet,**
daß das Schaltelement (13, 13') in Richtung der Schaltfahne (31, 31') verstellbar, beispielsweise mittels in dessen Gehäuse (18) eingearbeiteter Langlöcher (19) durchgreifender Schrauben (20) an einem an dem Futtertrog (2) angebrachten Halter (17) befestigt ist.

7. Vorrichtung nach einem oder mehreren der Ansprüche 1 bis 6,
**dadurch gekennzeichnet,**
daß die Steuerklappe (21) mit einer in deren unteren Bereich angeordneten Beschwerung (26) versehen ist.

8. Vorrichtung nach Anspruch 7,
**dadurch gekennzeichnet,**
daß die Beschwerung (26) an einer an der Steuerklappe (21) angeformten, z. B. winkelförmig ausgebildeten in den Futtertrog (2) ragenden Abkantung (28) angebracht ist.

9. Vorrichtung nach Anspruch 7 oder 8,
**dadurch gekennzeichnet,**
daß die Steuerklappe (23) mit einem mit dieser vertikal verstellbaren und/oder auswechselbar verbundenen Ansatzstück (23) versehen ist.

10. Vorrichtung nach Anspruch 9,
**dadurch gekennzeichnet,**
daß das Ansatzstück (23) als Beschwerung ausgebildet und/oder daß die Beschwerung (26) an dem Ansatzstück (23) angebracht ist.

11. Vorrichtung nach einem oder mehreren der Ansprüche 1 bis 10,
**dadurch gekennzeichnet,**
daß die Steuerklappe (21) durch die Kraft einer unmittelbar auf diese und/oder die Schaltfahne (31, 31') einwirkenden Feder (29) rückstellbar oder zur Betätigung des Schaltelementes (13') entgegen der Kraft einer Feder (36, 36') verstellbar ist.

12. Vorrichtung nach Anspruch 11,
**dadurch gekennzeichnet,**
daß die auf die Steuerklappe (21, 21') einwirkende Feder (29, 36) an dem auf das Schaltelement (13, 13') einwirkenden Schenkel (33, 33') der Schaltfahne (31, 31') und der Wand (4) des Futtertroges (2) oder einem Zwischenstück (Platte 35) angehängt oder abgestützt ist.

13. Vorrichtung nach einem oder mehreren der Ansprüche 1 bis 12,
**dadurch gekennzeichnet,**
daß die Steuereinheit (11) in Abhängigkeit von den von einem zu versorgenden Tier abgegebenen mittels einer Antenne (12) aufgenommenen Signalen beeinflußbar ist.

14. Verfahren zur gesteuerten Einbringung von Viehfutter (F) aus einem Vorratsbehälter (6) in einen Futtertrog (2) mit Hilfe einer antreibbaren Förderschnecke (8) oder einem ähnlichen Fördermittel, deren Antriebsmotor (9) durch eine Steuereinheit (11) schaltbar ist,
**dadurch gekennzeichnet,**
daß mittels einer vor einer Einlaßöffnung (5) des Futtertroges (2) verschwenkbar angeordneten Steuerklappe (21) ein mit der Steuereinheit (11) verbundenes Schaltelement (13, 13') derart betätigbar ist, daß der Antriebsmotor (9) der Förderschnecke (8) in Abhängigkeit von der in dem Futtertrog (2) bzw. hinter der Steuerklappe (21) befindlichen Futtermittelmenge (F) so lange abgeschaltet bleibt, bis die jeweils zugeteilte Futtermittelmenge aufgenommen ist.

15. Verfahren nach Anspruch 14,
**dadurch gekennzeichnet,**
daß die Steuerklappe (21) durch ein Tier betätigbar ist und der Antriebsmotor (9) der Förderschnecke (8) durch Einwirken eines zu versorgenden Tieres auf die durch dieses betätigte Steuerklappe (21) eingeschaltet wird und so lange eingeschaltet bleibt, bis die jeweils zugeteilte Futtermittelmenge in den Futtertrog (2) eingebracht bzw. aufgenommen ist.

16. Verfahren nach Anspruch 14 oder 15,
**dadurch gekennzeichnet,**
daß die Steuereinheit (11) durch von dem zu versorgenden Tier abgegebener mittels einer Antenne (12) aufgenommener Signale beinflußt wird.

## Claims

1. Means (1, 1') for the controlled delivery of animal feed (F) from a feed hopper (6) into a feed trough (2) using a driven conveyor worm (8) or a similar means of delivery, the drive motor (9) of which can be switched on and off by a control unit (11),
**characterized in that,**
the conveyor worm (8) or a similar means of delivery is connected directly to the feed trough (2) by means of an inlet opening (5) coaxially arranged with the conveyor worm (8) or similar means of delivery, and that a tilting control flap (21) which interacts with a switch element (13, 13') is positioned in front of the inlet opening (5), whereby the control flap (21) allows the drive motor (9) of the conveyor worm (8) to be switched on and off depending on the amount of feed (F') in the feed trough (2) or behind the control flap (21).

2. Means in accordance with Claim 1,
**characterized in that,**
the control flap (21) can be operated by an animal, and its operation switches on the drive motor (9) of the conveyor worm (8).

3. Means in accordance with Claim 1 or Claim 2,
**characterized in that,**
the control flap (21) is mounted in a tilting arrangement consisting of a hinge (27), joint (27') or similar means fitted above the inlet opening (5) of the feed trough (2).

4. Means in accordance with one or more of Claims 1 to 3,
**characterized in that,**
the control flap (21) is fitted with a switch actuator tab (31, 31') interacting either directly or indirectly with the switch element (13, 13') which is connected to the control unit (11) and takes the form of a signal transmitter.

5. Means in accordance with Claim 4,
**characterized in that,**
the switch actuator tab (31, 31') of the control flap (21) is inserted through or around the side of an opening (30) produced in the wall (4) of the feed trough (2), and that the switch element (13, 13') is attached to the outside of the feed trough (2), and in a preferred embodiment, is positioned within the swivel range of the switch actuator tab (31, 31').

6. Means in accordance with Claim 4 or Claim 5,
**characterized in that,**
the switch element (13, 13') can be displaced towards the switch actuator tab (31, 31'), for example by means of bolts (20) passing through slots (19) produced in its housing (18) and attached to a bracket (17) fixed onto the feed trough (2).

7. Means in accordance with one or more of Claims 1 to 6,
**characterized in that,**
the control flap (21) has a weight (26) fitted at its base.

8. Means in accordance with Claim 7,
**characterized in that,**
the weight (26) is attached to a bent edge (28) produced on the control flap (21), which is for example angular in profile and projects into the feed trough (2).

9. Means in accordance with Claim 7 or Claim 8,
**characterized in that,**
the control flap (23) has an additional section (23) which can be moved vertically in relation to the control flap (23) and/or replaced.

10. Means in accordance with Claim 9,
**characterized in that,**
the additional section (23) is produced as a weight and/or that the weight (26) is attached to the additional section (23).

11. Means with one or more of Claims 1 to 10,
**characterized in that,**
the return movement of the control flap (21) is effected by the force of a spring (29) acting directly on the control flap 823) and/or the switch actuator tab (31, 31'), or the control flap (21) can be moved against the force of a spring (36, 36') in order to actuate the switch element (13').

12. Means in accordance with Claim 11,
**characterized in that,**
the spring (29, 36) acting on the control flap (21, 21') is attached to or braced against the arm (33, 33') of the switch actuator tab (31, 31') which interacts with the switch element (13, 13') and to or against the wall (4) of the feed trough (2) or an adapter (plate 35).

13. Means in accordance with one or more of Claims 1 to 12,
**characterized in that,**
the manner in which the control unit (11) is influenced depends on the signals it picks up from an animal to be fed, the signals being transmitted by means of an antenna (12).

14. Method for the controlled delivery of animal feed (F) from a feed hopper (6) into a feed trough (2) using a driven conveyor worm (8) or a similar means of delivery, the drive motor (9) of which can be switched on and off by a control unit (11),
**characterized in that,**
a switch element (13, 13') connected to the control unit (11) can be actuated by a tilting control flap (21) positioned in front of an inlet opening (5) to the feed trough (2) in such a manner that the drive motor (9) of the conveyor worm (8) remains switched on depending on the amount of animal feed (F) in the feed trough (2) or behind the control flap (21) until the correspondingly apportioned amount of animal feed has been consumed.

15. Method in accordance with Claim 14,
**characterized in that,**
the control flap (21) can be operated by an animal and the drive motor (9) of the conveyor worm (8) is switched on by the interaction between an animal to be fed and the control flap (21) which the animal touches, and that the drive motor (9) remains switched on until the correspondingly apportioned amount of animal feed has been delivered into the feed trough (2) or consumed.

16. Method in accordance with Claim 14 or Claim 15,
**characterized in that,**
the control unit (11) is influenced by the signals it picks up from an animal to be fed, the signals being transmitted by means of an antenna (12).

## Revendications

1. Dispositif (1, 1') pour le chargement commandé d'alimentation animale (F) en provenance d'un réservoir (6) dans une mangeoire (2) au moyen d'une hélice transporteuse motorisée (8) ou d'un moyen de transport semblable, dont le moteur d'entraînement (9) se laisse actionner a l'aide d'une unité de commande (11),
caractérisé en ce que
l'hélice transporteuse (8) ou un moyen de transport semblable soient liés directement à la mangeoire (2) par une ouverture d'admission (5) disposée coaxialement et que, devant l'ouverture d'admission (5), il soit prévu un clapet de commande (21) pivotant collaborant avec un élément de commande (13, 13') qui permet de désactiver le moteur d'entraînement (9) de l'hélice transporteuse (8) en fonction de la quantité d'alimentation (F') dans la mangeoire (2) ou derrière le clapet de commande (21).

2. Dispositif d'après la revendication 1,
caractérisé en ce que
le clapet de commande (21) puisse être actionné par un animal, ce qui a pour effet que le moteur d'entraînement (9) de l'hélice transporteuse (8) soit mis en marche.

3. Dispositif d'après la revendication 1 ou 2,
caractérisé en ce que
le clapet de commande (21) soit accroché pivotant au moyen d'une charnière (27), d'une articulation (27') ou d'un organe semblable au-dessus de l'ouverture d'admission (5) de la mangeoire (2).

4. Dispositif d'après une des revendications 1 à 3,
caractérisé en ce que
le clapet de commande (21) soit équipé d'un talon de commande (31, 31') collaborant directement ou via des éléments intermédiaires avec l'élément de commande (13, 13') lié à l'unité de commande (11) et conçu sous forme d'un transmetteur de signal.

5. Dispositif d'après la revendication 4,
caractérisé en ce que
le talon de commande (31, 31') du clapet de commande (21) mène à travers une ouverture (30) pratiquée dans la paroi (4) de la mangeoire (2) ou le long de la paroi (4), et que l'élément de commande (13, 13') soit monté à l'extérieur de la mangeoire (2), de préférence sur celle-ci et dans la plage de pivotement du talon de commande (31, 31').

6. Dispositif d'après la revendication 4 ou 5,
caractérisé en ce que
l'élément de commande (13, 13') soit retenu réglable en direction du talon de commande (31, 31') sur un support (17) prévu sur la mangeoire (2), p. ex. au moyen de boulons (20) passant par des trous oblongs (19) pratiqués dans le boitier (18).

7. Dispositif d'après une ou plusieurs des revendications 1 à 6,
caractérisé en ce que
le clapet de commande (21) soit muni d'un poids (26) disposé au bas.

8. Dispositif d'après la revendication 7,
caractérisé en ce que
le poids (26) soit monté sur un repli (28) formé sur le clapet de commande (21), p.ex. sous forme angulaire, et saillant dans la mangeoire (2).

9. Dispositif d'après la revendication 7 ou 8,
caractérisé en ce que
le clapet de commande (21) soit muni d'un embout (23) lié réglable verticalement avec celui-ci et/ou échangeable.

10. Dispositif d'après la revendication 9,
caractérisé en ce que
l'embout (23) soit conçu en tant que poids et/ou que le poids (26) soit fixé sur l'embout (23).

11. Dispositif d'après une ou plusieurs des revendications 1 à 10,
caractérisé en ce que
le clapet de commande (21) se laisse rappeler par la force d'un ressort (29) agissant directement sur celui-ci et/ou le talon de commande (31, 31') et que, pour l'actionnement de l'élément de commande (13'), il se laisse régler contre la force d'un ressort (36, 36')

12. Dispositif d'après la revendication 11,
caractérisé en ce que
le ressort (29, 36) agissant sur le clapet de commande (21, 21') soit accroché ou s'appuye sur le bras (33, 33') agissant sur l'élément de commande (13, 13') du talon de commande (31, 31'), et sur la paroi (4) de la mangeoire (2) ou une pièce intermédiaire (plaque 35).

13. Dispositif d'après une ou plusieurs des revendications 1 à 12,
caractérisé en ce que
l'unité de commande (11) soit influencée par des signaux reçus par une antenne (12) et émis par un animal à alimenter.

14. Procédé pour le chargement commandé d'alimentation animale (F) en provenance d'un réservoir (6) dans une mangeoire (2) au moyen d'une hélice transporteuse motorisée (8) ou d'un moyen de transport semblable, dont le moteur d'entraînement (9) se laisse actionner à l'aide d'une unité de commande (11),
caractérisé en ce que,
au moyen d'un clapet de commande (21) disposé pivotant devant une ouverture d'admission (5) de la mangeoire (2), un élément de commande (13, 13') lié à l'unité de commande (11) se laisse actionner de sorte qu'en dépendance de la quantité d'alimentation dans la mangeoire (2) ou derrière le clapet de commande (21), le moteur d'entraînement (9) de l'hélice transporteuse (8) reste désactivé jusqu'à ce que la quantité d'alimentation proportionnée ait été consommée.

15. Procédé d'après la revendication 14,
caractérisé en ce que
le clapet de commande (21) se laisse actionner par un animal, que le moteur d'entraînement (9) de l'hélice transporteuse (8) soit commandé par un animal à alimenter agissant sur le clapet de commande (21), et reste en marche jusqu'à ce que la quantité d'alimentation attribuée soit chargée dans la mangeoire (2) ou consommée.

16. Procédé d'après les revendications 14 ou 15,
caractérisé en ce que
l'unité de commande (11) soit influencée par des signaux reçus par une antenne (12) et émis par un animal à alimenter.
